# EUROPEAN PATENT SPECIFICATION

(11) **EP 0 591 917 B1**
(45) Date of publication and mention of the grant of the patent: **09.12.1998**
(21) Application number: 93116067.5
(22) Date of filing: 05.10.1993
(51) Int. Cl.: B65B 55/08, B65D 65/40

(54) **A method of sterilizing the inside layer in a packaging material**
Verfahren zum Sterilisieren der Innenschicht in einem Verpackungsmaterial
Procédé de stérilisation de la couche intérieure d'un matériau d'emballage

(30) Priority: 07.10.1992 SE 9202933
(43) Date of publication of application: 13.04.1994
(73) Proprietor: Tetra Laval Holdings & Finance SA, 1009 Pully (CH)
(72) Inventor: Stark, Olof, S-271 00 Ystad (SE); Möller, Hakan, S-211 57 Malmö (SE)
(74) Representative: Müller, Hans-Jürgen, Dipl.-Ing.

(56) References cited:
- EP-A- 0 340 037
- EP-A- 0 381 510
- DE-A- 2 439 900
- GB-A- 2 061 085
- US-A- 4 464 336
- US-A- 4 871 559
- US-A- 5 034 235
- Book no. , 1979, 'LEICHTVERSTäNDLICHE EINFüHRUNG IN DIE KUNSTSTOFFCHEMIE, PAGE 44', G. GNAUCK/P. FRüNDT CARL HANSER VERLAG, MüNCHEN/WIEN

## Description

### TECHNICAL FIELD

The present invention relates to a method of sterilizing the inside layer of a packaging material intended for packing sterilized or bacteriareduced foods, the sterilization treatment being carried into effect by means of photoenergy which is supplied from a radiation source in the form of brief, high energy flashes.

### BACKGROUND ART

Such a method is, for example, previously known from US PS 4,464,336. However, it has proved that sterilization using flash light is not wholly effective in packaging materials with a high bacteria coating or contamination, probably because certain surface layers which contain bacteria or microorganism colonies are "shadowed" by superjacent bacteria colonies. As a result of this shadowing effect, not all bacteria or microorganisms located on the packaging material surface are reached during the treatment process.

It is known from e.g. US 3 985 284 or EP 0 381 510 to produce a multi-layered packaging material which comprises a transparent coating in the form of a thin transparent layer, such as polyethylene. By producing a packaging material with a transparent plastic inside and a subsequent light-reflective coating, it is possible to re-reflect substantial proportions of the emitted light which will then impinge upon the packaging material surface from "the opposite direction" as compared with direct light treatment and, thereby, to affect even those bacteria most proximal the surface layer which are not exposed to the direct effects of the light from the flash bulb. Naturally, this secondary light effect will not be as strong as the direct light effect, since the light will, first, be obliged to travel a longer distance, secondly pass through the transparent plastic surface layer twice, and thirdly be reflected by the light-reflective layer. However, by employing a plastic layer which is as transparent as possible, and by utilizing as good a light-reflective capacity as possible in the reflective layer, it is possible at those photoenergy levels which are employed, to obtain a reflected light wave which has a photoenergy of up to 90 percent of the initial energy.

### OBJECT OF INVENTION

It is the object of the present invention to provide a method for sterilizing the inside layer of a packaging material which is wholly effective for packaging materials with a high bacteria coating or contamination, thus preventing the negative effects of prior art.

The invention solves the difficulties of prior art throughout the features as claimed in claim 1, wherein preferred embodiments are specified in the subclaims.

### BRIEF DESCRIPTION OF THE ACCOMPANYING DRAWING

The present invention will now be described in greater detail hereinbelow, with particular reference to the accompanying Drawing, in which:
Fig. 1 is a section through a packaging material of the type employed together with the present invention;
Fig. 2 shows how the light flashes are reflected in the material; and
Fig. 3 shows a packaging tube with a flash unit disposed within the tube.

### DESCRIPTION OF PREFERRED EMBODIMENT

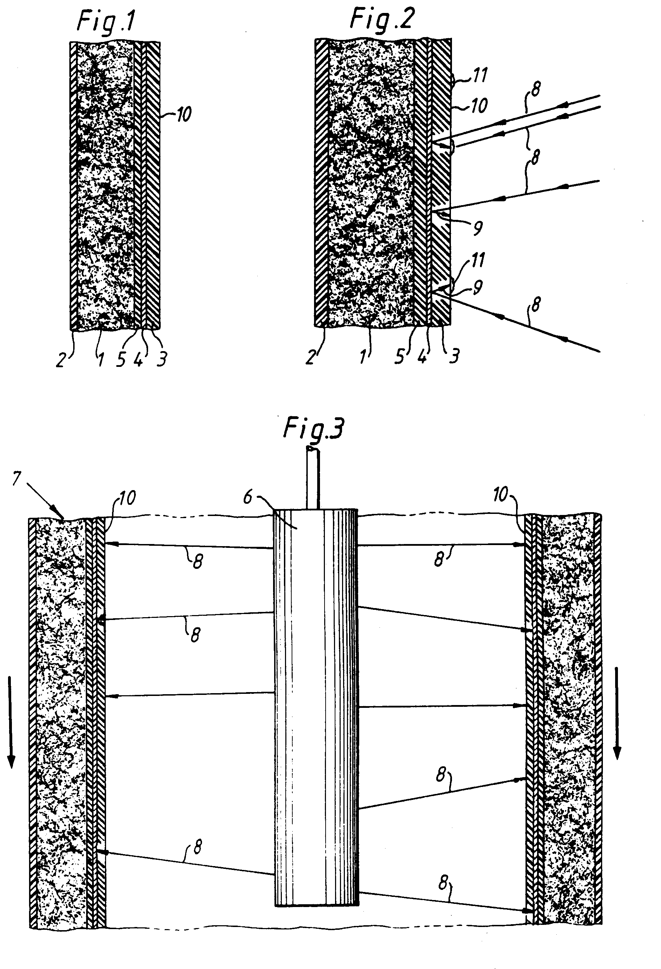

The packaging material illustrated in Fig. 1, which may be manufactured in the form of a web, consists of a core layer 1 of, for instance, paper or cardboard, but the core layer may also consists of, for example, foamed plastic (expanded polystyrene or polypropylene). This core layer 1 is, at least if the core layer consists of fibrous material, provided with an outside coating 2 of a thermoplastic, for example polyethylene, and the inside 3 of the laminate consists of a thermoplastic with slight light absorption, i.e. of high transparency, and a surface 10 of substantial surface smoothness, eg. polyethylene or polypropylene. Between the inside layer 3 and the core layer 1, there is provided a light-reflective layer 4 which may be laminated to the core layer 1 with the aid of a binder or adhesive layer 5. For the purposes of the present invention, it is the inside layer 3 and the light-reflective layer 4 that are of essential importance and these will, therefore, be discussed separately.

As has been mentioned above, the inside layer 3 is of high transparency so as not to absorb light which passes through the layer, and the layer must, moreover, be of extremely good surface smoothness, partly to reduce the bacteria coating and partly to permit light penetration without diffuse reflection or extremely high surface absorption. A material possessing high surface smoothness may be obtained by stretching extruded plastic film, for example polypropylene film, in which event the plastic film 3 is produced separately and is laminated to the light-reflective layer 4 by means of a thin transparent adhesive or binder, eg. molten polyethylene.

The light-reflective layer 4 may consist of a metal foil, eg. aluminium foil, whose bright-rolled surface is turned to face towards the inside layer 3 for the purposes of obtaining a high degree of light reflection from the layer 4. It is also possible to employ, instead of a metal foil such as aluminium foil, a metalised film, such as a thin polyester film which has been metalised by vacuum deposition of aluminium material on the polyester foil layer or direct on the inside layer 3. A metalised polyester film 4 can be laminated to the core layer 1 and the inside layer 3 in the normal manner by extrusion of an adhesive or binder, eg. polyethylene. If the inside layer 3 is prefabricated and stretched for obtaining a smooth surface 10, it is also possible to apply a metalisation in the form of a vacuum deposited aluminium layer direct on the film 3, and this vacuum deposited layer will, in such an event, constitute the layer which is designated 4 in Fig. 1. In the production of the laminate which is to constitute the packaging material, it must thus be ensured that the inside layer 3 of plastic material possesses as slight light absorption properties as possible and that the light-reflective layer 4 possesses as good reflective capability as possible. Naturally, the inside layer 3 must, in addition, be heat-sealable so that tight packages with mechanically durable seams or joints can be manufactured from the material.

Those packages which are manufactured from the disclosed packaging material may preferably be of the type which begins as a planar web which is formed into a tube in that the edges of the web are united with one another, whereafter the intended contents of the package are supplied to the interior of the tube which, by repeated flat pressings of transverse seals at right angles to the longitudinal axis of the tube, is divided into package units which are separated from the tube and are formed by folding into a package of the contemplated shape. In cases where the contents intended for the package consist of, for example, a sterilized food, the inside of the packaging material must also be sterilized since otherwise the sterilized food would be re-infected on coming into contact with the inside of the packaging material.

In the case described here, sterilization of the inside 10 of the packaging material takes place in such a manner that the packaging material is formed into a tube 7 by the longitudinal edge zones of the material being united with one another in a tight and durable seam or joint. This is effected in that mutually applied plastic layers are caused, within the seam or joint zone, to melt and fuse together under the supply of heat and pressure and thereafter are stabilized by cooling. Such a tube 7 may be formed continuously by a progressive unreeling of a planar material web from a magazine reel in that the web is gradually refolded into tube form in order for its edge zones finally to be united and sealed to one another. For sterilizing the inside of the tube 7, the tube has been disposed, as illustrated in Fig. 3, concentrically around a flash discharge unit 6 whose longitudinal extent runs in the axial direction of the tube 7. In this embodiment, the flash discharge unit 6 is shown as a cylindrical lamp, but it may also consist of a plurality of lamps or flash tubes disposed beside one another or in mutual sequence of per se known type. The light emitting flash unit 6 is positionally fixed, while, on the other hand, the tube 7 is disposed to move in relation to the flash unit 6 in the direction of the arrow shown on the Drawing. The flash unit 6 is connected to a supply unit which feeds pulses to control the flash emission of the flash unit at a frequency of between 1 and 10 pulses per second, preferably between 2 and 6 pulses per second, with a pulse duration of between 20 and 2000 µs. The pulse length, like the pulse frequency, may be varied considerably depending upon the design of the installation and the treated object, and the values disclosed above are merely to be considered as typical value ranges. The light dose which impinges on the inside layer of the packaging material may be regulated by the voltage supplied to the flash unit tube 6 and, to achieve a satisfactory bacteria-destructive affect, should amount to between 2 and 10 Joules per cm². Given that the tube 7 moves in relation to the flash unit 6 at relatively low speed, the same region will be illuminated and affected a plurality of times depending upon the frequency of flashes emitted. In addition to the relative speed of the tube 7 in relation to the flash unit 6 and the frequency of emitted light flashes, the length and flash intensity of the flash unit 6 also influence the level of final effect. Thus, if the tube 7 moves more quickly in relation to the flash unit 6, it is possible to achieve a sufficient bacteria-destructive effect by either increasing the length of the flash unit 6, increasing the frequency of the emitted flashes or their intensity, in addition to increasing the number of flash unit lamps proper.

As is apparent from Fig. 2, the surface 10 of the inside layer 3 is influenced partly by direct light flashes which are symbolized by the lines 8, and partly by indirect light flashes or reflected light flashes which are symbolized by the lines 9. This implies that colonies of bacteria and microorganisms 11 located on the surface 10 of the inside plastic layer 3 will be affected all-round by the emitted light flashes and an improved bacteria destruction result will be achieved.

As a result of the energy emissions, the inside layer 10 of the tube will be heated to some degree - but not to such an extent that this thermal effect alone could entail any sterilization. That which has been mentioned above in respect of the application of the present invention in the forming of packages starting from a tube 7 is only intended to illustrate a particularly advantageous field of application. Thus, it is possible in accordance with the inventive concept, to apply the method not only to raised package blanks or containers which are interiorly sterilized by means of flash discharge units 6 inserted into the blanks, but also to planar webs or sheets of packaging material which are formed into packages by means other than conversion into a tube. As has been mentioned in this description, the light reflecting layer 4 may either consist of a bright rolled metal foil, preferably aluminium foil, or of a so-called metalised surface, which is normally obtained by vacuum deposition of vaporized metal, for example aluminium, on a smooth film, for example plastic film. Such a vacuum deposited surface is extremely thin, since the surface layer is only a few molecules thick, but it can nevertheless provide an extremely good light reflection if the surface on which the metal is deposited is of sufficient surface smoothness. Glass or glass-like silicons may also, in a similar manner, be vacuum deposited onto a substrate and such a vacuum deposited glass layer affords a good gas barrier, as opposed to a vacuum deposited metal layer. Consequently, it is possible according to the present invention to produce a packaging material possessing a good gas barrier which is also environmentally safe, since it consists in principle of but a single material. Such a material may consist of a core layer of "foamed" or expanded polypropylene which is laminated together with a transparent polypropylene film presenting a light-reflective layer of vacuum deposited metal (aluminium), and a layer of gas-tight vacuum deposited glass. The vacuum deposited layers can either be laid one outside the other or be incorporated into the laminate as one coating on a special laminate film. The films included in the laminate can be co-laminated together by means of extruded polypropylene in a per se known manner. The advantage inherent in the described laminate (apart from giving an effective sterile treatment with flash light), is that the material consists to as good as 100 percent of a single plastic material, polypropylene in the present case. This implies major advantages when the material is to be recycled for reuse, since it can quite simply be melted down in its entirety. Granted, the material does contain a vacuum deposited metal layer and, if it is rendered gas-tight, a vacuum deposited glass layer, but as was mentioned earlier, these layers are extremely thin (only a few Ångström), so that they do not contaminate in any decisive manner the molten plastic material on recycling by melting. It has proved that sterilization treatment using flash illumination is extremely effective and, moreover, gives no side effects in the form of residual products, as is often the case in chemical sterilization. By applying the method according to the present invention, it is possible to give sterilization treatment to packaging material which has a high bacterial loading.

The present invention should not be considered as restricted to that described above and shown on the Drawing, many modifications being conceivable without departing from the scope of the appended Claims.

In the embodiments of the invention described above the reflecting layer 4 is a metal layer or a vacuum deposited layer. It is, however, possible to obtain a good reflection even with a white paper layer as a reflecting surface.

## Claims

1. A method of sterilizing the inside layer (3) of a packaging material manufactured in the form of a web consisting at least of a core layer (1) and said inside layer (3),
by means of photoenergy which is supplied from a radiation source (6) in the form of high energy flashes impinging on the surface of said inside layer (3),
**characterized by**
providing said packaging material with an inside layer (3) being selected from among the group of transparent thermoplastics and being sufficiently transparent to transmit said impinging photoenergy,
providing a light-reflective layer (4) of a light-reflective material being disposed between said core layer (1) and said inside layer (3) and being sufficiently reflective to reflect said transmitted photoenergy, and
directing said high energy flashes onto said inside layer (3), said high energy flashes being transmitted by said inside layer (3) and reflected by said light-reflective layer (4) for again impinging onto the surface of said inside layer (3), by destroying bacteria and microorganisms present on the surface of said inside layer (3) from both sides of said surface.

2. The method as claimed in claim 1,
characterized by
employing an inside layer (3) with high transparency and a light-reflective layer (4) of good light reflective capacity so that said photoenergy which is incident on said surface of said inside layer (3) in amounts greater than 2 Joules/cm² is transmitted and reflected to obtain a reflected light wave with an energy of up to 90% of the initial energy.

3. The method as claimed in claim 1 or 2,
characterized by
producing said packaging material by lamination of a plurality of mutually bonded laminate layers, said inside layer (3) of transparent thermoplastic being laminated to said layer (4) of light-reflective material.

4. The method as claimed in one of the preceeding claims,
characterized by
applying said light-reflective layer (4) by means of vacuum deposition directly on said inside layer (3).

5. The method as claimed in one of the preceeding claims,
characterized by
providing said light-reflective layer (4), consisting of a glass film or a vacuum deposited glass film with a light-reflective vacuum metalisation.

6. The method as claimed in one of the preceeding claims,
characterized by
forming said packaging material into a tube (7) and locating said tube (7) concentrically around said light radiation source (6).

7. The method as claimed in one of the preceeding claims,
characterized by
moving said tube (7) in relation to said light radiation source (6) in a continuous process.

8. The method as claimed in one of the preceeding claims,
characterized by
pulsing the emmission of light of said light radiation source (6) at frequencies of between 1 and 10 pulses per second, preferably between 2 and 6 pulses per second, with a pulse duration of between 20 and 2000 µs.

## Patentansprüche

1. Verfahren zum Sterilisieren der Innenschicht (3) eines Verpackungsmaterials, das in Form einer Bahn hergestellt ist, die wenigstens aus einer Kernschicht (1) und der Innenschicht (3) besteht,
mittels Lichtenergie, die von einer Strahlungsquelle (6) in Form von hochenergetischen Blitzen geliefert wird, die die Oberfläche der Innenschicht (3) beaufschlagen,
**dadurch gekennzeichnet**,
daß das Verpackungsmaterial mit einer Innenschicht (3) versehen wird, die aus der Gruppe transparenter Thermoplaste ausgewählt ist und ausreichend transparent ist, um die auftreffende Lichtenergie zu übertragen,
eine lichtreflektierende Schicht (4) aus einem lichtreflektierenden Material zwischen der Kernschicht (1) und der Innenschicht (3) angeordnet wird, die reflektierend genug ist, um die übertragene Lichtenergie zu reflektieren, und
die hochenergetischen Blitze auf die Innenschicht (3) gerichtet werden, wobei die hochenergetischen Blitze von der Innenschicht (3) übertragen und von der lichtreflektierenden Schicht (4) reflektiert werden, um wieder die Oberfläche der Innenschicht (3) zu beaufschlagen, wobei auf der Oberfläche der Innenschicht (3) vorliegende Bakterien und Mikroorganismen von beiden Seiten der Oberfläche zerstört werden.

2. Verfahren nach Anspruch 1,
dadurch gekennzeichnet, daß
eine Innenschicht (3) mit hoher Transparenz und eine lichtreflektierende Schicht (4) mit guter Lichtreflexionskapazität verwendet wird, so daß die Lichtenergie, die auf die Oberfläche der Innenschicht (3) in Mengen von mehr als 2 Joule/cm² auftrifft, übertragen und reflektiert wird, um eine reflektierte Lichtwelle mit einer Energie von bis zu 90 % der Ausgangsenergie zu erhalten.

3. Verfahren nach Anspruch 1 oder 2,
dadurch gekennzeichnet, daß
das Verpackungsmaterial durch Laminierung mehrerer miteinander verbundener Laminatschichten hergestellt wird, wobei die Innenschicht (3) aus transparentem Thermoplast an die Schicht (4) aus lichtreflektierendem Material laminiert ist.

4. Verfahren nach einem der vorhergehenden Ansprüche,
dadurch gekennzeichnet, daß
die lichtreflektierende Schicht (4) mittels Vakuumabscheidung direkt auf die Innenschicht (3) aufgebracht wird.

5. Verfahren nach einem der vorhergehenden Ansprüche,
dadurch gekennzeichnet, daß
die lichtreflektierende Schicht (4), die aus einem Glasfilm oder einem vakuumaufgebrachten Glasfilm besteht, mit einer lichtreflektierenden Vakuummetallisierung versehen wird.

6. Verfahren nach einem der vorhergehenden Ansprüche,
dadurch gekennzeichnet, daß
das Verpackungsmaterial zu einem Schlauch (7) geformt und der Schlauch (7) konzentrisch um die Lichtstrahlungsquelle (6) angeordnet wird.

7. Verfahren nach einem der vorhergehenden Ansprüche,
dadurch gekennzeichnet, daß
der Schlauch (7) in einem kontinuierlichen Verfahren bezüglich der Lichtstrahlungsquelle (6) bewegt wird.

8. Verfahren nach einem der vorhergehenden Ansprüche,
dadurch gekennzeichnet, daß die Emission von Licht der Lichtstrahlungsquelle (6) mit Frequenzen zwischen 1 und 10 Impulsen pro Sekunde, bevorzugt zwischen 2 und 6 Impulsen pro Sekunde mit einer Impulsdauer zwischen 20 und 2000 µs gepulst wird.

## Revendications

1. Procédé de stérilisation de la couche intérieure (3) d'un matériau d' emballage fabriqué sous la forme d'une bande consistant au moins en une couche formant noyau (1) et en ladite couche intérieure (3),
au moyen d'énergie lumineuse qui est fournie à partir d'une source de rayonnement (6) se présentant sous la forme d'éclairs à forte énergie frappant la surface de ladite couche intérieure (3),
caractérisé en ce que
ledit matériau d'emballage est pourvu d'une couche intérieure (3) qui est choisie parmi le groupe des matières thermo-plastiques transparentes et qui est suffisamment transparente pour transmettre ladite énergie lumineuse de collision,
une couche réfléchissant la lumière (4) en un matériau réfléchissant la lumière est prévue et disposée entre ladite couche formant noyau (1) et ladite couche intérieure (3) , et est suffisamment réfléchissante pour réfléchir ladite énergie lumineuse transmise ,et
on dirige lesdits éclairs à forte énergie sur ladite couche intérieure (3), lesdits éclairs à haute énergie étant transmis par ladite couche intérieure (3) et étant réfléchis par ladite couche réfléchissant la lumière (4) pour frapper encore la surface de ladite couche intérieure (3), en détruisant les bactéries et les micro-organismes présents sur la surface de ladite couche intérieure (3) et à partir des deux côtés de ladite surface.

2. Procédé selon la revendication 1,
caractérisé en ce que
on emploie une couche intérieure (3) à forte transparence et une couche réfléchissant la lumière (4) à bonne capacité de réflexion de la lumière de façon que ladite énergie lumineuse incidente sur ladite surface de ladite couche intérieure (3) en quantités supérieures à 2 joules/cm2, est transmise et réfléchie pour obtenir une onde lumineuse réfléchie ayant une énergie jusqu'à 90% de l'énergie initiale.

3. Procédé selon la revendication 1 ou 2,
caractérisé en ce que
on produit ledit matériau d'emballage par stratification de plusieurs couches stratifiées et liées ensemble, ladite couche intérieure (3) de matière thermoplastique transparente étant stratifiée à ladite couche (4) de matériau réfléchissant la lumière.

4. Procédé selon l'une des revendications précédentes
caractérisé en ce que
on applique ladite couche réfléchissant la lumière (4) au moyen d'une déposition sous vide directement sur ladite couche intérieure (3)

5. Procédé selon l'une des revendications précédentes,
caractérisé en ce que
ladite couche réfléchissant la lumière (4), est constituée d'un film de verre ou d'un film de verre déposé sous vide et pourvu d'une métallisation sous vide réfléchissant la lumière.

6. Procédé selon l'une des revendications précédentes,
caractérisé en ce que
on forme ledit matériau d'emballage en un tube (7) et on place ledit tube (7) concentriquement autour de ladite source de rayonnement lumineux (6)

7. Procédé selon l'une des revendications précédentes,
caractérisé en ce que
l'on déplace ledit tube (7) par rapport à ladite source de rayonnement lumineux (6) selon un processus continu.

8. Procédé selon l'une des revendications précédentes,
caractérisé en ce que
on pulse l'émission de lumière de ladite source de rayonnement lumineux (6) à des fréquences comprises entre 1 et 10 impulsions par seconde, de préférence entre 2 et 6 impulsions par seconde, avec une durée d'impulsion comprise entre 20 et 2000 µ s.
